# EUROPÄISCHE PATENTSCHRIFT

(11) **EP 0 478 884 B1**
(45) Veröffentlichungstag und Bekanntmachung des Hinweises auf die Patenterteilung: **29.11.1995**
(21) Anmeldenummer: 91105861.8
(22) Anmeldetag: 12.04.1991
(51) Int. Cl.: F02D 11/10, B60K 28/16

(54) **Lastverstelleinrichtung**
Load control apparatus
Dispositif de réglage de charge

(30) Priorität: 01.10.1990 DE 4031002
(43) Veröffentlichungstag der Anmeldung: 08.04.1992
(73) Patentinhaber: VDO Adolf Schindling AG, D-60487 Frankfurt (DE)
(72) Erfinder: Mausner, Eberhard, W-6237 Liederbach (DE); Pfalzgraf, Manfred, W-6000 Frankfurt/Main (DE)
(74) Vertreter: Klein, Thomas, Dipl.-Ing. (FH)

(56) Entgegenhaltungen:
- EP-A- 106 348
- EP-A- 0 107 265
- EP-A- 0 182 020
- DE-A- 3 836 471
- US-A- 4 896 640
- "Handbuch der Kraftfahrzeugtechnik" Band 1, Buschmann/Koessler, Seiten 298, 299
- "Kraftfahrtechnisches Taschenbuch" Bosch, 1987, Seiten 360-363

## Beschreibung

Die Erfindung bezieht sich auf eine Einrichtung zum Verstellen der Leistung einer Brennkraftmaschine in einem Kraftfahrzeug mit mindestens zwei Drosselklappen und einem einzigen Steuerelement, das auf eine Drosselklappe einwirkt und das über eine Feder mit einem von einem Fahrpedal betätigbaren Mitnehmer gekoppelt ist, wobei das eine Ende der Feder mit dem Steuerelement und das andere Ende der Feder mit dem Mitnehmer verbunden ist, sowie zusätzlich mittels eines elektrischen Stellantriebs bewegbar ist, mit einem dem Mitnehmer zugeordneten Sollwerterfassungselement und einem dem elektrischen Stellantrieb zugeordneten Istwerterfassungselement und mit einer elektronischen Regeleinrichtung für die Ansteuerung des elektrischen Stellantriebs in Abhängigkeit von den erfaßten Soll- und Istwerten.

Aus der EP-A-0 107 265 ist eine Einrichtung der eingangs genannten Art bekannt. Dabei sind die beiden Drosselklappen in Reihe in einem einzigen Saugkanal angeordnet. Durch das Steuerelement ist nur auf eine der Drosselklappen einwirkbar.

Eine weitere Einrichtung ist aus der DE 38 15 734 A1 bekannt. Die dient dem Zweck, die üblicherweise fahrpedalseitige Ansteuerung des Stellgliedes in bestimmten Betriebszuständen der Brennkraftmaschine bzw. dem von dieser angetriebenen Kraftfahrzeug durch den von der Regelelektronik angesteuerten Stellantrieb zu ersetzten. So kann die elektronische Regeleinrichtung beispielsweise derart eingreifen, daß Radschlupf beim Anfahren infolge zu hoher Leistung vermieden wird, indem sie bei zu raschem Niedertreten des Fahrpedals dafür sorgt, daß das Stellglied stärker abgeregelt wird, als es der Fahrpedalstellung entspricht, so daß die Brennkraftmaschine nur eine zu keinem Durchdrehen der Räder führende Leistung erzeugt. Andere, automatische Eingriffe in die Einrichtung sind erforderlich, wenn ein Getriebe automatisch schalten soll, oder wenn die Leerlaufdrehzahl auch bei unterschiedlichen Leistungsanforderungen im Leerlauf, beispielsweise durch im Kraftfahrzeug zugeschaltete Verbraucher, auf einen konstanten Wert geregelt werden soll. Schließlich besteht bei der Einrichtung auch die Möglichkeit, in Art eines Geschwindigkeitsreglers einzugreifen, der durch die Möglichkeit der Entkoppelung des Steuerelementes vom Fahrpedal dafür sorgt, daß jeweils diejenige Leistung eingestellt wird, die zur Aufrechterhaltung der eingestellten Geschwindigkeit erforderlich ist. Daneben kann es insbesondere unter dem Aspekt des Fahrkomforts erwünscht sein, eine progressive bzw. degressive Anlenkung des Fahrpedals vorzusehen, mit der Möglichkeit, einer gegenüber der Fahrpedal verringerten bzw. erhöhten Leistungseinstellung.

Bei dieser bekannten Einrichtung wirkt das Steuerelement mit einem Stellglied zusammen, das beispielsweise als Drosselklappe ausgebildet ist. Insbesondere für den Fall der Leerlaufregelung mittels des elektrischen Stellantriebes ergibt sich bei der Verwendung eines Stellgliedes das Problem, daß ein geringer Verstellwinkel der Drosselklappe mittels des Stellantriebes beherrscht werden muß. Um diese Anforderung zu erfüllen ist es erforderlich, den elektrischen Stellantrieb baulich aufwendig zu gestalten, dies gilt insbesondere dann, wenn der Stellantrieb nicht nur den Leerlaufregelbereich, sondern auch - wie bei der Geschwindigkeitsregelung erforderlich - den Teillast- und Vollastbereich der Brennkraftmaschine abdecken soll.

Es ist Aufgabe der vorliegenden Erfindung, eine Einrichtung der genannten Art so weiter zu bilden, daß mit dieser bei baulich einfacher Ausgestaltung die unterschiedlichen Lastzustände der Brennkraftmaschine mit großer Genauigkeit beherrscht werden können. Die Einrichtung soll darüber hinaus entsprechend den geschilderten Einzelanforderungen die Möglichkeit bieten, in Art eines Systembaukastens kombinierbar zu sein.

Gelöst wird die Aufgabe dadurch, daß das Steuerelement mindestens auf zwei Drosselklappen einwirkt und jede Drosselklappe in einem ihr zugeordneten Saugkanal angeordnet ist, wobei die Saugkanäle strömungstechnisch parallel geschaltet sind.

Bevorzugt ist diese Anordnung der Drosselklappe weil insbesondere bei der Verwendung von zwei Drosselklappen die Möglichkeit gegeben ist, mittels der ersten Drosselklappe über einen großen Verstellwinkel den Leerlaufregelbereich und mittels der zweiten Drosselklappe den Teillast-/Vollastbereich abzudecken. Bevorzugt wirkt dabei der Mitnehmer im Leerlaufregelbereich nur auf die diesen Bereich betreffende Drosselklappe, während erst im Teil-Vollastbereich die andere Drosselklappe beaufschlagt wird. Entsprechendes gilt für die Ansteuerung der Drosselklappe bzw. der Drosselklappen über den elektrischen Stellantrieb. Hier ist insbesondere vorgesehen, daß der elektrische Stellantrieb in Wirkverbindung mit der den Leerlaufregelbereich abdeckenden Drosselklappe bringbar ist; soll mittels des elektrischen Stellantriebes auch der Teil-Vollastbereich der Brennkraftmaschine geregelt werden, ist zusätzlich eine Einwirkung des elektrischen Stellantriebes auf die diesem Lastbereich zugeordnete Drosselklappe vorgesehen.

Die vorliegende Erfindung betrifft damit grundsätzlich eine Einrichtung der genannten Art, bei der mehrere Drosselklappen, vorgesehen sind, wobei der Mitnehmer mit allen Drosselklappen, sowie der elektrische Stellantrieb zumindest mit einem der Drosselklappen in Wirkverbindung bringbar ist. Der elektrische Stellantrieb kann des weiteren mit allen Drosselklappen in Wirkverbindung bringbar sein, ferner kann vorgesehen sein, daß der Mitnehmer nacheinander in Wirkverbindung mit den Drosselklappen bringbar ist, entsprechendes gilt für den elektrischen Stellantrieb. Bevorzugt sind zwei Drosselklappen vorgesehen, von denen die erste im Leerlaufbereich und die zweite im Teillast-/Vollastbereich der Brennkraftmaschine beaufschlagbar ist. Die erfindungsgemäße Einrichtung gestattet somit über die Regelung der einen Drosselklappe mittels des elektrischen Stellmotors eine Leerlaufregelung und bei einer möglichen Einwirkung von Mitnehmer und elektrischen Stellmotor auf alle Drosselklappen im Registerbetrieb eine Geschwindigkeitsregelung und eine Antischlupfregelung.

Gemäß einer besonderen Ausgestaltung der Erfindung ist vorgesehen, daß das Steuerelement ein mit dem Mitnehmer gekoppeltes mitnehmerseitiges Steuerelementteil aufweist, das mit einem, einer ersten Drosselklappe zugeordneten ersten drosselklappenseitigen Steuerelementteil und einem, einer zweiten Drosselklappe zugeordneten zweiten drosselklappenseitigen Steuerelementteil zusammenwirkt, sowie ein über den elektrischen Stellantrieb ansteuerbares stellantriebseitiges Steuerelementteil vorgesehen ist, das zumindest mit einer der Drosselklappen zusammenwirkt, bevorzugt darüber mit beiden drosselklappenseitigen Steuerelementteilen. Gemäß einer besonderen Ausführungsform der Erfindung umfaßt das Steuerelement Übersetzungselemente, so daß mitnehmerseitige Bewegungen auf eine oder mehrere der Drosselklappen sowie stellantriebseitige Bewegungen auf eine oder mehrere der Drosselklappen übersetzt übertragen werden können, wobei hierunter selbstverständlich auch eine Untersetzung zu verstehen ist. Bei einer Aufteilung der Regelbereiche der Brennkraftmaschine im wesentlichen auf einen Leerlaufregelbereich mittels einer Drosselklappe und einen Teillast-/Vollastregelbereich mittels der anderen Drosselklappe sollte zumindest die letztgenannte Drosselklappe mittels der Übersetzungselemente betätigt werden. Es ist aber auch denkbar, daß die dem Leerlaufregelbereich zugeordnete Drosselklappe gleichfalls mittels Übersetzungselementen betätigt wird. Die Einwirkung der Übersetzungselemente auf die Drosselklappen kann zeitlich versetzt erfolgen, beispielsweise, indem zunächst die den Leerlaufregelbereich abdeckende Drosselklappe beaufschlagt wird und erst bei Erreichen des LLₘₐₓ-Punktes die Beaufschlagung der anderen Drosselklappe hinzukommt, wobei selbstverständlich im Teillast-/Vollastbereich auch weiterhin eine Regelung der dem Leerlaufbereich zugeordneten Drosselklappe erfolgen kann.

Gemäß einer besonderen Ausgestaltung der Erfindung ist vorgesehen, daß die erste und zweite Drosselklappe oder das erste und zweite drosselklappenseitige Steuerelementteil mittels Federn in Leerlaufrichtung vorgespannt sind. Dies bedingt zum einen eine eindeutige Führung zwischen der Drosselklappe und dem Mitnehmer bzw. dem Steuerelement, andererseits ist sichergestellt, daß bei einem Ausfall des elektrischen Stellantriebes oder einen Verklemmen des Mitnehmers bzw. den Brechen einer dem Mitnehmer in Leerlaufrichtung vorspannenden Feder die Drosselklappen definiert in die Leerlaufstellung zurückgeführt werden. Zusätzlich sollten dem Mitnehmer sowie dem ersten und zweiten drosselklappenseitigen Steuerelementteil deren unbeaufschlagte Positionen erfassende Sicherheitskontakte zugeordnet sein, mittels derer die Plausibilitätsbedingungen betreffend die Steuerung der Drosselklappe über den Mitnehmer und den elektrischen Stellantrieb darstellbar sind. Das Istwerterfassungselement ist vorteilhaft dem stellantriebseitigen Steuerelementteil zugeordnet.

Eine Weiterbildung der Erfindung sieht vor, daß in den Bewegungsweg des mitnehmerseitigen Stellantriebes in Aufregelrichtung das stellantriebseitige Steuerelementteil ragt. Hierdurch läßt sich auf einfache Art und Weise eine Antischlupfregelung erzielen, derart, daß mittels des stellantriebseitigen Steuerelementteiles das mit dem Mitnehmer über die Koppelfeder gekoppelte mitnehmerseitige Steuerelementteil in Leerlaufrichtung bewegbar und damit die Einrichtung abregelbar ist. Weiterhin kann vorgesehen sein, daß in den Bewegungsweg des drosselklappenseitigen Steuerelementteiles, das der den Teillast-/Vollastbereich der Brennkraftmaschine abdeckenden Drosselklappe zugeordnet ist, in Aufregelrichtung das mitnehmerseitige Steuerelementteil ragt. Hierdurch ist eine Maximalwertbildung gewährleistet, das heißt es befindet sich das mitnehmerseitige Steuerelementteil und damit der mit diesem gekoppelte Mitnehmer und weiterhin das Fahrpedal in einer Stellung, die der aktuellen Leistungseinstellung an den Drosselklappen entspricht, dies auch dann, wenn die Regelung der Drosselklappen über den elektrischen Stellantrieb erfolgt. Schließlich kann vorgesehen sein, daß in den Bewegungsweg des drosselklappenseitigen Steuerelementteiles, das der den Teillast-/Vollastbereich der Brennkraftmaschine abdeckenden Drosselklappe zugeordnet ist, in Abregelrichtung in Übergang von Teillast zu Leerlauf ein Anschlag ragt. In diesem Fall erfolgt über den elektrischen Stellantrieb nur eine Regelung der den Leerlaufregelbereich abdeckenden Drosselklappe, der Verfahrbereich des stellantriebseitigen Steuerelementteiles ist in Aufregelrichtung durch den Anschlag begrenzt.

Weitere Merkmale der Erfindung sind in der Beschreibung der Figuren dargestellt, wobei bemerkt wird, daß alle Einzelmerkmale und alle Kombinationen von Einzelmerkmalen erfindungswesentlich sind.

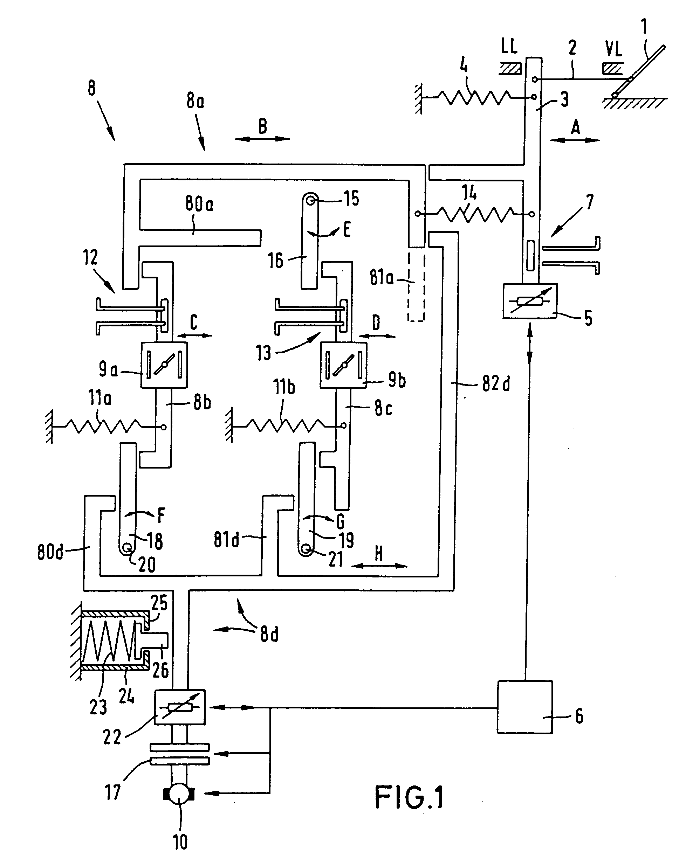

In den Figuren 1 bis 4 ist die Erfindung an vier Ausführungsformen beispielsweise dargestellt, ohne auf diese beschränkt zu sein. Alle Ausführungsformen betreffen zwei Drosselklappen, die Ausführungsformen sollen verschiedene Bauumfänge des Systembaukastens für die Lastverstelleinrichtung verdeutlichen.

Es stellt dar:
- Figur 1: ein Blockschaltbild der Einrichtung mit der Systembaukastenfunktion des universellen "elektronischen Gaspedales",
- Figur 2: ein Blockschaltbild für die Systembaukastenfunktion der Leerlaufregelung und der Geschwindigkeitsbegrenzungsregelung,
- Figur 3: ein Blockschaltbild für die Systembaukastenfunktion der Leerlaufregelung und der Antischlupfregelung und
- Figur 4: ein Blockschaltbild für die Systembaukastenfunktion der Leerlaufregelung.

Die Figuren 1 bis 4 verdeutlichen die Ausführungsformen in einer bewerteten Lineardarstellung.

In der Figur 1 ist ein Fahrpedal 1 gezeigt, mit dem über ein Gestänge 2 ein einteiliger Mitnehmer 3 zwischen einen Leerlaufanschlag LL und einem Vollastanschlag VL verschiebbar ist. Der Mitnehmer 3 und damit das Fahrpedal 1 sind mittels einer am Mitnehmer 3 angreifenden Rückzugfeder 4 in Leerlaufrichtung vorgespannt. Der Mitnehmer 3 ist mit einen Sollwerterfassungselement 5 in Art eines Schleifers eines Potentiometers verbunden, das mit einer elektronischen Regeleinrichtung 6 zusammenwirkt. Die Leerlaufstellung des Mitnehmers 3 wird mittels eines Sicherheitskontaktes 7 erfaßt, der gleichfalls mit der elektronischen Regeleinrichtung 6 zusammenwirkt.

Die Einrichtung weist ferner ein Steuerelementteil 8 auf, das mit zwei Drosselklappen 9a und 9b zusammenwirkt. Die Drosselklappe 9a dient dabei primär der Regelung des Leerlaufbereiches der Brennkraftmaschine, die Drosselklappe 9b hingegen die Regelung des Teillast-/Vollastbereiches. Angesteuert wird das Steuerelement 8 und damit die Drosselklappen 9a und 9b über den Mitnehmer 3 und/oder einen elektrischen Stellantrieb 10.

Das Steuerelement 8 besteht aus einem mitnehmerseitigen Steuerelementteil 8a, einem ersten, die Drosselklappe 9a beaufschlagenden, drosselklappenseitigen Steuerelementteil 8b, einem zweiten, die Drosselklappe 9b beaufschlagenden drosselklappenseitigen Steuerelementteil 8c sowie einem stellantriebseitigen Steuerelementteil 8d. Die beiden drosselklappenseitigen Steuerelementteile 8b und 8c sind jeweils mittels Rückzugfedern 11a bzw. 11b in Leerlaufrichtung vorgespannt. Die Ausgangspositionen der beiden drosselklappenseitigen Steuerelementteile 8b und 8c überwachen Sicherheitskontakte 12 und 13, so der Sicherheitskontakt 12 beispielsweise eine LL_{Not}-Position des ersten drosselklappenseitigen Steuerelementteiles 8b und der Sicherheitskontakt 13 die minimale Teillastposition des zweiten drosselklappenseitigen Steuerelementteiles 8c. Die Sicherheitskontakte 12 und 13 wirken, wie der Sicherheitskontakt 7, mit der elektronischen Regeleinrichtung 6 zusammen.

Das mitnehmerseitige Steuerelementteil 8a ist so ausgebildet, daß es in Aufregelrichtung den Mitnehmer 3 und das zweite drosselklappenseitige Steuerelementteil 8b kontaktiert. Die Verbindung zwischen dem Mitnehmer 3 und dem ersten drosselklappenseitigen Steuerelementteil 8a erfolgt durch eine Koppelfeder 14, die die beiden Teile gegeneinander zieht. In den Aufregelungsweg des mitnehmerseitigen Steuerelementteiles 8a ragt ferner ein um einen ortsfesten Punkt 15 schwenkbares Übersetzungselement 16.

Bei einer Bewegung des mitnehmerseitigen Steuerelementteiles 8a in Aufregelrichtung gelangt ein Ansatz 80a des mitnehmerseitigen Steuerelementteiles 8a bei Erreichen des Teillastbereiches des mitnehmerseitigen Steuerelementteiles 8a in Abstand zum ortsfesten Punkt 15 in Anlage an das Übersetzungselement 16 und verschwenkt dieses zusammen mit dem am Übersetzungselement 16 anliegenden zweiten drosselklappenseitigen Steuerelementteil 8c. Die sich aus der linearen Darstellung ergebende gradlinige Bewegung des Mitnehmers 3 verdeutlichen die Pfeile A, die entsprechende lineare Bewegung des mitnehmerseitigen Steuerelementteiles 8a die Pfeile B, die geradlinige Bewegung der beiden drosselklappenseitigen Steuerelementteile die Pfeile C und D sowie die Schwenkbewegung des Übertragungselementes 16 die Pfeile E.

Über den elektrischen Stellantrieb 10 und eine diesen nachgeschaltete Kupplung 17 erfolgt die Ansteuerung des stellantriebseitigen Steuerelementteiles 8d. Dieses weist zwei Ansätze 80d und 81d auf, wobei der Ansatz 80d mit einem Übertragungselement 18 zusammenwirkt, das seinerseits mit dem ersten drosselklappenseitigen Steuerelementteil 8b zusammenwirkt, entsprechend ist dem Ansatz 81d ein Übertragungselement 19 und diesem das zweite drosselklappenseitige Steuerelementteil 8c zugeordnet. Das Übertragungselement 18 ist um einen ortsfesten Punkt 20 schwenkbar, wobei der das Übertragungselement 18 beabstandet zum ortsfesten Punkt 20 kontaktierende Ansatz 80d dieses in Richtung der Pfeile F verschwenkt und damit eine Bewegung des ersten drosselklappenseitigen Steuerelementteiles 8b im Leerlaufregelbereich mittels des stellantriebseitigen Steuerelementteiles 8d ermöglicht. Entsprechend ragt in Aufregelrichtung des Ansatzes 81d das Übertragungselement 19 in dessen Bewegungsweg, so daß der Ansatz 81d dieses beabstandet zu einen ortsfesten Punkt 21 bei Erreichen einer Teillastposition kontaktiert und über eine Schwenkbewegung des Übertragungselementes 19 entsprechend der Pfeile G eine Verschiebung des zweiten drosselklappenseitigen Steuerelementteiles 8c mittels des elektrischen Stellantriebes im Teillast-/Vollastbereich der Einrichtung möglich ist.

Die jeweilige Position des stellantriebseitigen Steuerelementteiles 8d wird durch ein Istwerterfassungselement 22 erfaßt, das mit der elektronischen Regeleinrichtung 6 zusammenwirkt. Dieses steuert auch den elektrischen Stellantrieb 10 und die Kupplung 17 an.

Die Ansteuerung der beiden Drosselklappen 9a und 9b kann zunächst ausschließlich über das Fahrpedal 1 und damit den Mitnehmer 3 erfolgen. Eine Bewegung des Fahrpedales 1 in Aufregelrichtung führt zu einer entsprechenden Bewegung des Mitnehmers 3, der über die Koppelfeder 14 das mitnehmerseitige Steuerelementteil 8a in Aufregelrichtung des Pfeiles B verschiebt. Im Leerlaufregelbereich gelangt dabei das mitnehmerseitige Steuerelementteil 8a nur in Anlage mit dem ersten drosselklappenseitigen Steuerelementteil 8b, was zu einer Ansteuerung der Drosselklappe 9b führt, erst nach dem Verlassen des Leerlaufregelbereiches legt sich der Ansatz 80a des mitnehmerseitigen Steuerelementteiles 8a an das Übertragungselement 16 an, womit bei einer weiteren Aufregelbewegung des mitnehmerseitigen Steuerelementteiles 8a eine aufregelnde Verschiebung des zweiten drosselklappenseitigen Steuerelementteiles 8c und damit eine Regelung der den Teillast-/Vollastbereich abdeckenden Drosselklappe 9b erfolgt. In aller Regel verbleibt die Drosselklappe 9a während der Regelung der Einrichtung im Teillast-/Vollastbereich geöffnet, es ist aber gleichfalls denkbar, daß eine weitere Aufregelbewegung des mitnehmerseitigen Steuerelementteiles 8a zu einer abregelnden Bewegung der Drosselklappe 9a führt. Soll die Last über den elektrischen Stellantrieb 10 verstellt werden, wird über die elektronische Regeleinrichtung 6 der elektrische Stellantrieb 10 aktiviert und die Kupplung 17 geschlossen, was zu einer Bewegung des stellantriebseitigen Steuerelementteiles 8d in Aufregelrichtung des Doppelpfeiles H führt, so daß zunächst über den Ansatz 80d das Übertragungselement 18 in Aufregelrichtung verschwenkt wird und dabei das erste drosselklappenseitige Steuerelementteil 8b, das mit der Drosselklappe 9a zusammenwirkt, verschwenkt wird und bei Erreichen des Teillastbereiches der Einrichtung zusätzlich eine Verschwenkung des Übertragungselementes 19 über den Ansatz 81d des stellantriebseitigen Steuerelementteiles 8a erfolgt, was in Teillast-Vollastbereich der Einrichtung zu einer Regelung über die Drosselklappe 9b führt. Von der elektronischen Regeleinrichtung 6 werden dabei diejenigen Signale erfaßt, die von den Sicherheitskontakten 7, 12 und 13, dem Sollwerterfassungselement 5 und dem Istwerterfassungselement 22 ausgehen. Überdies werden externe Zustandsgrößen betreffend die Brennkraftmaschine oder allgemein betreffend das mit dieser ausgerüstete Kraftfahrzeug in die elektronische Regeleinrichtung 6 eingegeben und von dieser abgerufen, sowie von der elektronischen Regeleinrichtung 6 zu den von dieser angesteuerten Teilen der Einrichtung transferiert. Die elektronische Regeleinrichtung 6 dient somit im Zusammenwirken mit den genannten Teilen dem Zweck, eine Sicherheitslogik betreffend die Steuerung von Mitnehmer 3 und Steuerelement 8 aufzubauen. Sollte bei einer Leerlaufstellung des Steuerelementes 8, die geringer ist als eine Leerlaufnotstellung LL_{Not}, die elektronische Regeleinrichtung 6 oder der elektrische Stellantrieb 10 nicht ordnungsgemäß funktionieren, bewirkt eine in Richtung der maximalen Leerlaufstellung vorgespannte, wegbegrenzte Feder 23, die Überführung des ersten drosselklappenseitigen Steuerelementteiles 8b und damit der den Leerlauf regelnden Drosselklappe 9a in die Leerlaufnotstellung. Die Wegbegrenzung der Feder 23 kann beispielsweise durch einen in einer stationären Hülse 24 gegen einen Anschlag 25 verschiebbaren, durch die Feder 23 belasteten Stößel 26 erfolgen. Bei einer Bewegung des stellanriebseitigen Steuerelementteiles 8d mittels des elektrischen Stellantriebes 10 in Richtung der minimalen Leerlaufstellung wird der Stößel 26 von stellantriebseitigen Steuerelementteil 8d in die Hülse 24 eingeschoben und spannt die Feder 23 dabei weiter vor.

Mit der erfindungsgemäßen Einrichtung lassen sich in Baukastenprinzip die unterschiedlichsten Problemstellungen beherrschen. Bei der Ausbildung nach Figur 1 ist zunächst über den Ansatz 80d des stellantriebseitigen Steuerelementteiles 8d eine Leerlaufregelung möglich, weiterhin durch die Ansätze 80d und 81d eine Geschwindigkeitsregelung über den gesamten Betriebsbereich des Fahrzeuges. Ungeachtet dessen ist über den Mitnehmer 3 und das mitnehmerseitige Steuerelementteil 8a eine entsprechende Regelung im Leerlaufbereich bzw. dem gesamten Betriebsbereich des Fahrzeuges möglich. Daneben gestattet die gezeigte Einrichtung aufgrund des gestrichelt eingezeichneten, verlängerten Ansatzes 81a des mitnehmerseitigen Steuerelementteiles 8a, der auf der Aufregelseite des zweiten drosselklappenseitigen Steuerelementteiles 8c in dessen Bewegungsweg ragt, eine Maximalwertbildung. Durch die Ausbildung des stellantriebseitigen Steuerelementteiles 8d mit einem zusätzlichen Ansatz 82d, der das mitnehmerseitige Steuerelementteil 8a in Aufregelrichtung hintergreift, ist zudem eine Antischlupfregelung gewährleistet, da der elektrische Stellantrieb 10 und damit das stellantriebseitige Steuerelementteil 8d unmittelbar entgegen der Einwirkung des Mitnehmers 3 und des Fahrpedales 1 und entgegen der Kraft der Koppelfeder 14 auf das mitnehmerseitige Steuerelementteil 8a einwirken kann.

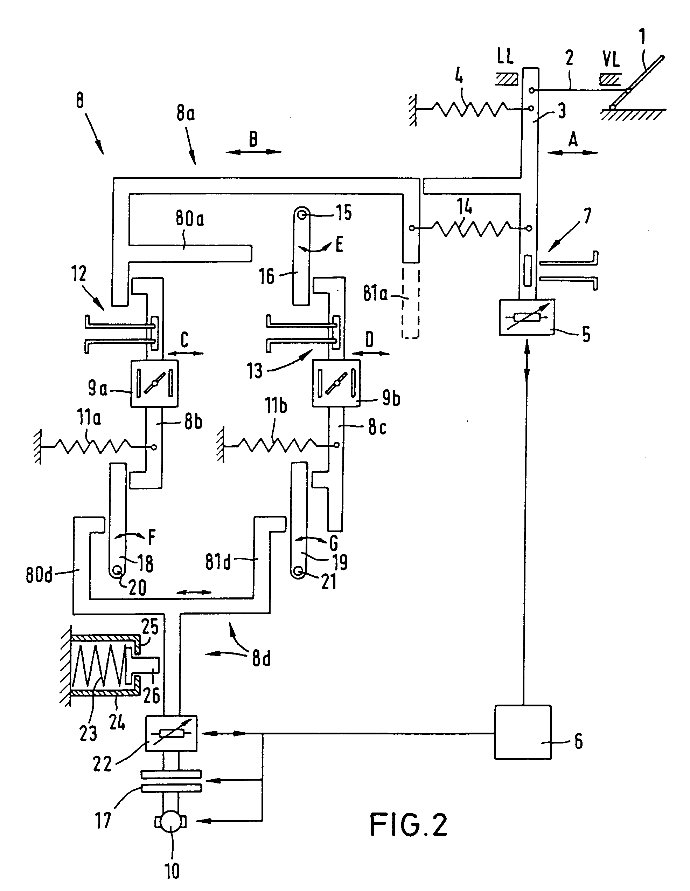

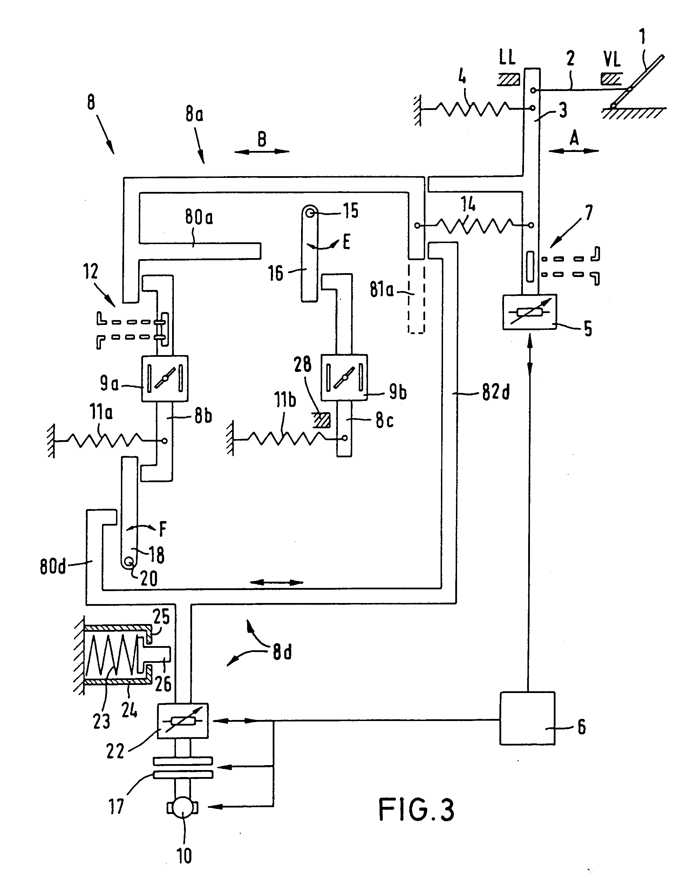

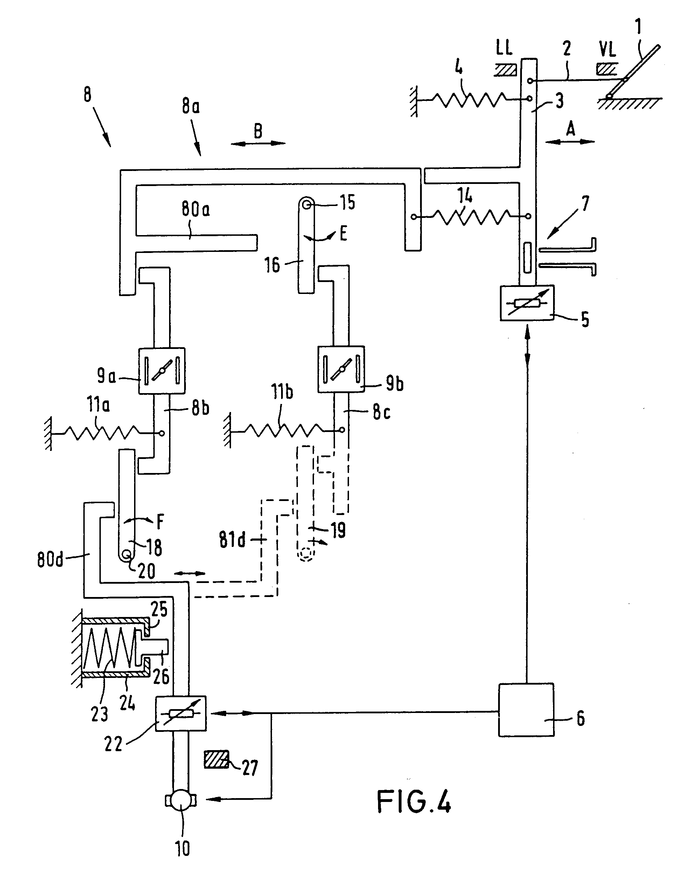

Figur 2 zeigt für die erfindungsgemäße Einrichtung den Systembaukasten, der alle in Figur 1 beschriebenen Funktionen bis auf die Funktion der Antischlupfregelung aufweist. Es fehlt bei dieser Darstellung nach Figur 2 der das mitnehmerseitige Steuerelementteil 8a hintergreifende Ansatz 82d des stellantriebseitigen Steuerelementteils 8d. Das dort dargestellte System dient daher der elektronischen Leerlaufregelung und der Geschwindigkeitsbegrenzungsregelung. Bei den System nach Figur 3 ist eine Leerlaufregelung sowie eine Antischlupfregelung möglich, hier fehlt gegenüber der Darstellung nach Figur 1 der Ansatz 81d des stellantriebseitigen Steuerelementteiles 8d und das mit diesen zusammenwirkende Übertragungselement 19, womit die Regelung der Drosselklappe 9b über den elektrischen Stellantrieb 10 entfällt. Bei dieser Darstellung begrenzt ein Anschlag 28 die Bewegung des Steuerelementteils 8c im Übergang vom Teillast- zum Leerlaufbereich. In Figur 4 verdeutlichen die ausgezogenen Linien, daß dort ausschließlich eine Leerlaufregelung möglich ist, weshalb auch ein die Stellung LL-ₘₐₓ begrenzender Anschlag 27 vorgesehen ist, die strichlierte Darstellung, bei der der Ansatz 80d und das Übertragungselement 18 sowie der Anschlag 27 fehlen, zeigt eine Alternative, bei der nur eine elektronische Regelung der Drosselklappe 9b erfolgt.

### Bezugszeichenliste

- 1: Hebel
- 2: Gestänge
- 3: Mitnehmer
- 4: Rückzugfeder
- 5: Sollwerterfassungselement
- 6: elektronische Regeleinrichtung
- 7: Sicherheitskontakt
- 8: Steuerelement
- 8a: mitnehmerseitiges Steuerelementteil
- 8b: erstes stellgliedseitiges Steuerelementteil
- 8c: zweites stellgliedseitiges Steuerelementteil
- 8d: stellantriebsseitiges Steuerelementteil
- 9a: Stellglied/Drosselklappe
- 9b: Stellglied/Drosselklappe
- 10: elektrischer Stellantrieb
- 11a: Rückzugfeder
- 11b: Rückzugfeder
- 12: Sicherheitskontakt
- 13: Sicherheitskontakt
- 14: Koppelfeder
- 15: ortsfester Punkt
- 16: Übersetzungselement
- 17: Kupplung
- 18: Übersetzungselement
- 19: Übersetzungselement
- 20: ortsfester Punkt
- 21: ortsfester Punkt
- 22: Istwerterfassungselement
- 23: Feder
- 24: Hülse
- 25: Anschlag
- 26: Stößel
- 27: Anschlag
- 28: Anschlag
- 80a: Ansatz
- 81a: Ansatz
- 80d: Ansatz
- 81d: Ansatz
- 82d: Ansatz

## Patentansprüche

1. Einrichtung zum Verstellen der Leistung einer Brennkraftmaschine in einem Kraftfahrzeug mit mindestens zwei Drosselklappen und einem einzigen Steuerelement, das auf eine Drosselklappe einwirkt und das über eine Feder mit einem von einem Fahrpedal betätigbaren Mitnehmer gekoppelt ist, wobei das eine Ende der Feder mit dem Steuerelement und das andere Ende der Feder mit dem Mitnehmer verbunden ist, sowie zusätzlich mittels eines elektrischen Stellantriebs bewegbar ist, mit einem dem Mitnehmer zugordneten Sollwerterfassungselement und einem dem elektrischen Stellantrieb zugeordneten Istwerterfassungselement und mit einer elektronischen Regeleinrichtung für die Ansteuerung des elektrischen Stellantriebs in Abhängigkeit von den erfaßten Soll- und Istwerten, **dadurch gekennzeichnet**, daß das Steuerelement (8) mindestens auf zwei Drosselklappen (9a, 9b) einwirkt und jede Drosselklappe (9a, 9b) in einem ihr zugeordneten Saugkanal angeordnet ist, wobei die Saugkanäle strömungstechnisch parallel geschaltet sind.

2. Einrichtung nach Anspruch 1, **dadurch gekennzeichnet**, daß der elektrische Stellantrieb (10) mit allen Drosselklappen (9a, 9b) in Wirkverbindung bringbar ist.

3. Einrichtung nach Anspruch 1 oder 2, **dadurch gekennzeichnet**, daß der Mitnehmer (3) nacheinander in Wirkverbindung mit den Drosselklappen (9a, 9b) bringbar ist.

4. Einrichtung nach Anspruch 2 oder 3, **dadurch gekennzeichnet**, daß der elektrische Stellantrieb (10) nacheinander in Wirkverbindung mit den Drosselklappen (9a, 9b) bringbar ist.

5. Einrichtung nach einem der Ansprüche 1 bis 4, **dadurch gekennzeichnet**, daß zwei Drosselklappen (9a, 9b) vorgesehen sind, von denen die erste (9a) im Leerlaufbereich und die zweite (9b) im Teillast-/Vollastbereich der Brennkraftmaschine beaufschlagbar ist.

6. Einrichtung nach einem der Ansprüche 1 bis 5, **dadurch gekennzeichnet**, daß das Steuerelement (8) ein mit dem Mitnehmer (3) gekoppeltes mitnehmerseitiges Steuerelementteil (8a) aufweist, das mit einem, einer ersten Drosselklappe (9a) zugeordneten ersten drosselklappenseitigen Steuerelementteil (8b) und einem, einer zweiten Drosselklappe (9b) zugeordneten zweiten drosselklappenseitigen Steuerelementteil (8c) zusammenwirkt, sowie ein über den elektrischen Stellantrieb (10) ansteuerbares stellantriebseitiges Steuerelementteil (8d) vorgesehen ist, das zumindest mit einer der Drosselklappen (9a) zusammenwirkt.

7. Einrichtung nach Anspruch 6, **dadurch gekennzeichnet**, daß das stellantriebseitige Steuerelementteil (8d) mit dem ersten und zweiten stellgliedseitigen Steuerelementteil (8b, 8c) zusammenwirkt.

8. Einrichtung nach einem der Ansprüche 1 bis 7, **dadurch gekennzeichnet**, daß das Steuerelement (8) Übersetzungselemente (16, 18, 19) umfaßt.

9. Einrichtung nach Anspruch 8, **dadurch gekennzeichnet**, daß das mitnehmerseitige Steuerelementteil (8a) über ein Übersetzungselement (16) auf das zweite stellgliedseitige Steuerelementteil (8c) einwirkt.

10. Einrichtung nach Anspruch 8 oder 9, **dadurch gekennzeichnet**, daß das stellanriebseitige Steuerelementteil (8d) über ein Übersetzungselement (18) bzw. Übersetzungselemente (18, 19) auf das erste und/oder zweite stellgliedseitige Steuerelementteil (8b, 8c) einwirkt.

11. Einrichtung nach einem der Ansprüche 8 bis 10, **dadurch gekennzeichnet**, daß die Übersetzungselemente (16, 18, 19) bei unterschiedlichen Lastzuständen der Brennkraftmaschine auf die Drosselklappen (9a, 9b) einwirken.

12. Einrichtung nach einem der Ansprüche 6 bis 11, **dadurch gekennzeichnet**, daß die erste und zweite Drosselklappe (9a, 9b) oder das erste und zweite stellgliedseitige Steuerelement (8b, 8c) mittels einer Feder (11a, 11b) in Leerlaufrichtung vorgespannt sind.

13. Einrichtung nach einem der Ansprüche 6 bis 12, **dadurch gekennzeichnet**, daß dem Mitnehmer (3) sowie dem ersten und zweiten stellgliedseitigen Steuerelementteil (8b, 8c) deren unbeaufschlagte Positionen erfassende Sicherheitskontakte (7, 12, 13) zugeordnet sind.

14. Einrichtung nach einem der Ansprüche 6 bis 13, **dadurch gekennzeichnet**, daß das Istwerterfassungselement (22) dem stellantriebseitigen Steuerelementteil (8d) zugeordnet ist.

15. Einrichtung nach einem der Ansprüche 6 bis 14, **dadurch gekennzeichnet**, daß in den Bewegungsweg des mitnehmerseitigen Steuerelementteiles (8a) in Aufregelrichtung das stellantriebseitige Steuerelementteil (8d) ragt.

16. Einrichtung nach einem der Ansprüche 6 bis 15, **dadurch gekennzeichnet**, daß in den Bewegungsweg des stellgliedseitigen Steuerelementteiles (8c), das der den Teillast-/Vollastbereich der Brennkraftmaschine abdeckenden Drosselklappe (9b) zugeordnet ist, in Aufregelrichtung das mitnehmerseitige Steuerelementteil (8a) ragt.

17. Einrichtung nach einem der Ansprüche 6 bis 16, **dadurch gekennzeichnet**, daß in den Bewegungsweg des stellantriebseitigen Steuerelementteiles (8c), das der den Teillast-/Vollastbereich der Brennkraftmaschine abdeckenden Drosselklappe (9b) zugeordnet ist, in Abregelrichtung im Übergang von Leerlauf zu Teillast ein Anschlag (28) ragt.

## Claims

1. Device for adjusting the power of an internal-combustion engine in a motor vehicle, having at least two throttle flaps and a single control element which acts on one throttle flap and which is coupled via a spring to a driver actuable by an accelerator pedal 1, one end of the spring being connected to the control element and the other end of the spring to the driver and additionally being movable by means of an electrical actuating drive, with a desired-value recording element assigned to the driver and an actual-value recording element assigned to the electrical actuating drive and with an electronic regulating device for activating the electrical actuating drive in dependence on the recorded desired and actual values, characterized in that the control element (8) acts at least on two throttle flaps (9a, 9b) and each throttle flap (9a, 9b) is arranged in a suction duct assigned to it, the suction ducts being connected in parallel in terms of flow.

2. Device according to Claim 1, characterized in that the electrical actuating drive (10) can be connected operatively to all the throttle flaps (9a, 9b).

3. Device according to Claim 1 or 2, characterized in that the driver (3) can be successively connected operatively to the throttle flaps (9a, 9b).

4. Device according to Claim 2 or 3, characterized in that the electrical actuating drive (10) can be successively connected operatively to the throttle flaps (9a, 9b).

5. Device according to one of Claims 1 to 4, characterized in that there are provided two throttle flaps (9a, 9b), of which the first (9a) can be loaded in the idling range and the second (9b) in the part-load/full-load range of the internal-combustion engine.

6. Device according to one of Claims 1 to 5, characterized in that the control element (8) has a driver-side control-element part (8a) which is coupled to the driver (3) and which cooperates with a first control-element part (8b) located on the throttle-flap side and assigned to a first throttle flap (9a) and with a second control-element part (8c) located on the throttle-flap side and assigned to a second throttle flap (9b), and there is provided a control-element part (8d) which is located on the actuating-drive side and can be activated via the electrical actuating drive (10) and which cooperates at least with one of the throttle flaps (9a).

7. Device according to Claim 6, characterized in that the control-element part (8d) located on the actuating-drive side cooperates with the first and second actuator-side control-element part (8b, 8c).

8. Device according to one of Claims 1 to 7, characterized in that the control element (8) comprises step-up elements (16, 18, 19).

9. Device according to Claim 8, characterized in that the driver-side control-element part (8a) acts via a step-up element (16) on the second actuator-side control-element part (8c).

10. Device according to Claim 8 or 9, characterized in that the control-element part (8d) located on the actuating-drive side acts via a step-up element (18) or step-up elements (18, 19) on the first and/or second actuator-side control-element part (8b, 8c).

11. Device according to one of Claims 8 to 10, characterized in that the step-up elements (16, 18, 19) act on the throttle flaps (9a, 9b) in different load states of the internal-combustion engine.

12. Device according to one of Claims 6 to 11, characterized in that the first and second throttle flap (9a, 9b) or the first and second actuator-side control element (8b, 8c) are pretensioned in the idling direction by means of a spring (11a, 11b).

13. Device according to one of Claims 6 to 12, characterized in that the driver (3) and the first and second actuator-side control-element part (8b, 8c) are assigned safety contacts (7, 12, 13) which record their non-loaded positions.

14. Device according to one of Claims 6 to 13, characterized in that the actual-value recording element (22) is assigned to the control-element part (8d) located on the actuating-drive side.

15. Device according to one of Claims 6 to 14, characterized in that the control-element part (8d) located on the actuating-drive side projects in the cut-in direction into the path of movement of the driver-side control-element part (8a).

16. Device according to one of Claims 6 to 15, characterized in that the driver-side control-element part (8a) projects in the cut-in direction into the path of movement of the actuator-side control-element part (8c) which is assigned to the throttle flap (9b) covering the part-load/full-load range of the internal-combustion engine.

17. Device according to one of Claims 6 to 16, characterized in that a stop (28) projects in the cut-off direction, at the transition from idling to part load, into the path of movement of the control-element part (8c) located on the actuating-drive side and assigned to the throttle flap (9b) covering the part-load/full-load range of the internal-combustion engine.

## Revendications

1. Dispositif de réglage de la puissance d'un moteur à combustion interne de véhicule automobile, comportant au moins deux clapets d'étranglement et un unique élément de commande qui agit sur un clapet d'étranglement et qui est couplé, par l'intermédiaire d'un ressort, à un organe d'entraînement susceptible d'être actionné par une pédale d'accélération, l'une des extrémités du ressort étant reliée à l'élément de commande et l'autre extrémité dudit ressort étant reliée à l'organe d'entraînement, et pouvant être additionnellement entraînée au moyen d'un entraînement électrique de réglage, comportant un élément capteur de valeurs de consigne, affecté à l'organe d'entraînement et un élément capteur de valeurs réelles, affecté à l'entraînement électrique de réglage, ainsi qu'un dispositif électronique de régulation, destiné à activer l'entraînement électrique de réglage en fonction des valeurs de consigne et réelles captées, caractérisé par le fait que l'élément de commande (8) agit au moins sur deux clapets d'étranglement (9a, 9b), et chaque clapet d'étranglement (9a, 9b) est disposé dans un canal d'aspiration qui lui est affecté, les canaux d'aspiration étant branchés en parallèle concernant la technique d'écoulement.

2. Dispositif selon la revendication 1, caractérisé par le fait que l'entraînement électrique de réglage (10) peut être mis en liaison interactive avec tous les clapets d'étranglement (9a, 9b).

3. Dispositif selon la revendication 1 ou 2, caractérisé par le fait que l'organe d'entraînement (3) peut être successivement mis en liaison interactive avec les clapets d'étranglement (9a, 9b).

4. Dispositif selon la revendication 2 ou 3, caractérisé par le fait que l'entraînement électrique de réglage (10) peut être successivement mis en liaison interactive avec les clapets d'étranglement (9a, 9b).

5. Dispositif selon l'une des revendications 1 à 4, caractérisé par le fait que deux clapets d'étranglement (9a, 9b) sont prévus, le premier (9a) de ceux-ci pouvant être sollicité dans la plage de ralenti, et le second (9b) pouvant être sollicité dans les plages de charge partielle et de pleine charge du moteur à combustion interne.

6. Dispositif selon l'une des revendications 1 à 5, caractérisé par le fait que l'élément de commande (8) présente une partie (8a) située du côté de l'organe d'entraînement, couplée audit organe d'entraînement (3) et coopérant avec une première partie (8b) d'élément de commande, située du côté des clapets d'étranglement et affectée à un premier clapet d'étranglement (9a), et avec une deuxième partie (8c) d'élément de commande, située du côté des clapets d'étranglement et affectée à un second clapet d'étranglement (9b), une partie (8d) d'élément de commande, située du côté de l'entraînement de réglage et pouvant être activée par l'intermédiaire de cet entraînement électrique de réglage (10), coopérant au moins avec l'un (9a) des clapets d'étranglement.

7. Dispositif selon la revendication 6, caractérisé par le fait que la partie (8d) d'élément de commande, située du côté de l'entraînement de réglage, coopére avec les première et deuxième parties (8b, 8c) d'élément de commande qui sont situées du côté de l'organe de réglage.

8. Dispositif selon l'une des revendications 1 à 7, caractérisé par le fait que l'élément de commande (8) comprend des éléments de transmission (16, 18, 19).

9. Dispositif selon la revendication 8, caractérisé par le fait que la partie (8a) d'élément de commande située du côté de l'organe d'entraînement agit, par l'intermédiaire d'un élément de transmission (16), sur la deuxième partie (8c) d'étément de commande qui est située du côté de l'organe de réglage.

10. Dispositif selon la revendication 8 ou 9, caractérisé par le fait que la partie (8d) d'élément de commande située du côté de l'entraînement de réglage agit, par l'intermédiaire d'un élément de transmission (18) ou d'éléments de transmission (18, 19), sur la première partie (8b) et/ou sur la deuxième partie (8c) d'élément de commande qui sont situées du côté de l'organe de réglage.

11. Dispositif selon l'une des revendications 8 à 10, caractérisé par le fait que les éléments de transmission (16, 18, 19) agissent sur les clapets d'étranglement (9a, 9b) dans des états de charge différents du moteur à combustion interne.

12. Dispositif selon l'une des revendications 6 à 11, caractérisé par le fait que les premier et second clapets d'étranglement (9a, 9b), ou les premier et deuxième éléments de commande (8b, 8c), sont mis sous contrainte préalable dans le sens du ralenti, au moyen d'un ressort (11a, 11b).

13. Dispositif selon l'une des revendications 6 à 12, caractérisé par le fait que des contacts de sécurité (7, 12, 13) sont affectés à l'organe d'entraînement (3), ainsi qu'aux première et deuxième parties (8b, 8c) d'élément de commande situées du côté des organes de réglage, lesquels contacts détectent les positions de non-sollicitation de ceux-ci.

14. Dispositif selon l'une des revendications 6 à 13, caractérisé par le fait que l'élément (12) capteur de valeurs réelles est affecté à la partie (8d) d'élément de commande qui est située du côté de l'entraînement de réglage.

15. Dispositif selon l'une des revendications 6 à 14, caractérisé par le fait que la partie (8d) d'élément de commande qui est située du côté de l'entraînement de réglage dépasse, dans le sens d'un réglage croissant, sur la trajectoire de déplacement de la partie (8a) d'élément de commande qui est située du côté de l'organe d'entraînement.

16. Dispositif selon l'une des revendications 6 à 15, caractérisé par le fait que la partie (8a) d'élément de commande qui est située du côté de l'organe d'entraînement dépasse, dans le sens d'un réglage croissant, sur la trajectoire de déplacement de la partie (8c) d'élément de commande qui est située du côté de l'organe de réglage et est affectée au clapet d'étranglement (9b) couvrant la plage de charge partielle et de pleine charge du moteur à combustion interne.

17. Dispositif selon l'une des revendications 6 à 16, caractérisé par le fait qu'une butée (28) dépasse, dans le sens d'un réglage décroissant à la transition entre le ralenti et la charge partielle, sur la trajectoire de déplacement de la partie (8c) d'élément de commande qui est située du côté de l'entraînement de réglage, et est affectée au clapet d'étranglement (9b) couvrant la plage de charge partielle et de pleine charge du moteur à combustion interne.
